# EUROPÄISCHE PATENTSCHRIFT

(11) **EP 1 561 225 B1**
(45) Veröffentlichungstag und Bekanntmachung des Hinweises auf die Patenterteilung: **03.01.2007**
(21) Anmeldenummer: 03795732.1
(22) Anmeldetag: 12.11.2003
(51) Int. Cl.: H01F 7/08, H01F 7/16, F02M 25/07, F15B 13/044, F16K 31/06

(54) **TAUCHANKERSYSTEM MIT EINSTELLBARER MAGNETISCHER DURCHFLUTUNG**
SOLENOID PLUNGER SYSTEM WITH AN ADJUSTABLE MAGNETIC FLUX
SYSTEME A INDUIT PLONGEUR AVEC FLUX DE COURANT MAGNETIQUE REGLABLE

(30) Priorität: 14.11.2002 DE 10253347; 18.06.2003 DE 10327875
(43) Veröffentlichungstag der Anmeldung: 10.08.2005
(73) Patentinhaber: WOCO Industrietechnik GmbH, 63628 Bad Soden-Salmünster (DE)
(72) Erfinder: REICHERT, Uwe, 36381 Schlüchtern (DE); PRAIZA, Josef, 75501 Vsetin (CZ)
(74) Vertreter: Weber-Bruls, Dorothée
(86) Internationale Anmeldenummer: PCT/DE2003/003760
(87) Internationale Veröffentlichungsnummer: WO 2004/044932

(56) Entgegenhaltungen:
- DE-C- 4 110 003
- US-A1- 2002 121 828

## Beschreibung

Die Erfindung betrifft ein Tauchankersystem für einen elektropneumatischen Druckwandler, umfassend, zumindest teilweise in einer Magnetfeldlinien M bündelnden Ummantelung, insbesondere in Form einer Eisenummantelung, einen Tauchanker und einen Kern, insbesondere in Form eines Eisen- oder Magnetkerns, wobei der Tauchanker zumindest eine Ausnehmung auf der dem Kern zugewandten Seite und/oder der Kern zumindest eine erste Ausnehmung auf der dem Tauchanker zugewandten Seite aufweist, und ein Luftspalt zwischen dem Tauchanker und dem Kern bereitgestellt ist, wobei der Luftspalt durch Relativ-Bewegung zwischen dem Tauchanker und dem Kern, während der der Tauchanker in die erste Ausnehmung in dem Kern und/oder der Kern in die Ausnehmung in dem Tauchanker zumindest teilweise hinein- bzw. aus derselben hinausbewegbar ist, einstellbar ist, und die Ummantelung zumindest eine erste Hülse und ein Joch, jeweils mit hoher magnetischer Permeabilität, umfaßt, wobei die erste Hülse zwischen dem Tauchanker und zumindest einer Spule und/oder zumindest einem Magneten angeordnet ist, und der Luftspalt in einem Bereich zwischen der ersten Hülse und dem Joch angeordnet ist.

Ein elektropneumatischer Druckwandler mit einem gattungsgemäßen Tauchankersystem ist, beispielsweise, aus der DE 41 10 003 C1 bekannt. In einer Kammer (Mischkammer) des bekannten elektropneumatischen Druckwandlers wird dabei aus einem Unterdruck an einem ersten Anschluß und einem Umgebungsdruck an einem zweiten Anschluß ein Mischdruck erzeugt, der an einem dritten Anschluß einem Verbraucher zur Verfügung gestellt wird. Die Zuströmung von Unter- bzw. Umgebungsdruck in besagte Kammer wird durch ein Doppelsitzventil reguliert. Dabei hängt die Verbindung der Kammer mit der Unterdruclcseite von der Anordnung einer Ventilplatte ab, deren Bewegung durch eine vorgespannte Druckfeder unterstützt wird, aber auch nur durch Aktivierung eines Elektromagneten des Tauchankersystems eingeleitet werden kann. Eine Verbindung der Kammer zum Umgebungsdruck hängt von der Position eines Tauchankers des Tauchankersystems ab. Es wird somit die Bewegung der Ventilplatte durch pneumatische Kräfte eingeleitet, indem der Differenzdruck zwischen dem Druck in der Kammer und dem Umgebungsdruck über eine definierte Fläche eine bestimmte Kraft auf den Tauchanker ausübt. Im Normalbetrieb des elektropneumatischen Wandlers stellt sich dabei für alle Mischdrücke ein Gleichgewichtszustand ein, der dadurch gekennzeichnet ist, daß die Summe aller am Tauchanker des Tauchankersystems angreifenden Kräfte zu Null wird. Diese Kräfte sind die Federkraft der Druckfeder, die Zugkraft des Elektromagneten und die pneumatischen Kräfte. Es handelt sich also um ein geregeltes System, das ein Proportional/Integral-Verhalten aufweist. Dabei resultiert das Proportionalverhalten aus der Druckfeder und dem Elektromagneten, während die Pneumatik durch den sich aufbauenden Druck in besagter Kammer das integrierende Verhalten beisteuert. Eine an den Elektromagneten angelegte getaktete Gleichspannung mit variablen Tastverhältnissen liefert den Soll-Wert des Regelkreises. Je nach Taktverhältnis fließt in einer Spule des Elektromagneten ein anderer effektiver Strom, der in einer anderen effektiven Magnetkraft resultiert. Zu jeder Magnetkraft wiederum regelt sich der elektropneumatische Druckwandler auf einen neuen Mischdruck und damit einen neuen Gleichgewichtszustand ein. Diese Regelung kann nur dadurch realisiert werden, daß ein Kennlinienmagnet im Tauchankersystem zum Einsatz kommt. Dieser Kennlinienmagnet umfaßt gemäß der DE 41 10 003 C1 zwei Eisenkerne. Dabei ist der erste Eisenkern gegenüber einer magnetischen Kraftlinien bündelnden Eisenummantelung und damit auch relativ zu einem Tauchanker verschiebbar, während der zweite Eisenkern relativ zum ersten Eisenkern verschiebbar ist, wobei der zweite Eisenkern in eine Aussparung des Tauchankers hineinragen kann. Somit läßt sich auf zweifache Weise der für die Kraftentstehung im Tauchankersystem wesentliche Luftspalt zwischen dem Tauchanker und dem sich aus den beiden Eisenkernen zusammensetzenden, konturveränderlichen Kennlinienmagneten einstellen. Diese zweifache Verstellbarkeit ein und derselben magnetischen Kenngröße, nämlich des Luftspaltes zwischen dem Tauchanker und dem Kennlinienmagneten und damit der Feldverteilung, wobei bedingt durch die Flächenverhältnisse die Verstellung des ersten Eisenkerns größeren Einfluß hat als die des zweiten Eisenkerns, findet stets in Wechselwirkung miteinander statt. Nachteiligerweise können die beiden Einstellungen also nicht entkoppelt erfolgen, was eine genaue Einstellung des Luftspaltes und somit insbesondere ein Ausgleich von Maßtoleranzen erschwert. So läßt sich zwar mit dem ersten Eisenkern ein Betriebsbereich des Kennlinienmagneten in einen Abschnitt positiver Steigung und somit positiver Steifigkeit einstellen, wenn der Wendepunkt der Kraft- Weg- Kennlinie im Verstellbereich des ersten Eisenkerns liegt. Anschließend kann dann auch über den zweiten Eisenkern ein geforderter quantitativer Zusammenhang zwischen Taktverhältnis und Mischdruck eingestellt werden, wobei diese Einstellung, wie bereits erwähnt, nicht entkoppelt von der ersten Einstellung ausgeführt werden kann.

Ein weiteres gattungsgemäßes Tauchankersystem ist in der DE 100 46 939 beschrieben. Auch bei diesem Tauchankersystem kommen zwei verstellbare Eisenkerne zum Einstellen eines einzigen Luftspaltes zum Einsatz, wobei zusätzlich Dämpfungsglieder in dem Luftspalt eingeordnet sind, um einerseits die Abnutzung des Tauchankersystems zu verringern und andererseits den Einsatzbereich desselben zu vergrößern. Jedes Dämpfungsglied verhindert dabei sicher einen metallischen Anschlag von Tauchanker und Kern, ohne daß eine aufwendige Dichtung des Luftspaltes vorliegen muß; jedes Dämpfungsglied dämpft zudem Schall zur Reduktion der Geräuschemission eines das Tauchankersystem verwendenden elektropneumatischen Druckwandlers; und jedes Dämpfungsglied ist vorzugsweise aus einem Elastomer ausgebildet, das eine geringe Temperaturabhängigkeit aufweist und somit den Einsatzbereich des elektropneumatischen Druckwandlers vergrößert.

Aufgabe der vorliegenden Erfindung ist es, das gattungsgemäße Tauchankersystem derart weiterzuentwickeln, daß die Nachteile des Stands der Technik überwunden werden, insbesondere die Einstellungsmöglichkeiten erweitert und vereinfacht werden. Dabei sollen zwei voneinander entkoppelte Einstellmöglichkeiten bereitgestellt werden.

Diese Aufgabe wird erfindungsgemäß dadurch gelöst, daß die Ummantelung eine zweite Hülse mit hoher magnetischer Permeabilität zwischen der ersten Hülse und dem Joch umfaßt, die zumindest eine Ausnehmung, insbesondere in Form einer Ringnut, auf ihrer dem Kern abgewandten Seite zur Bündelung von Magnetfeldlinien M vom Joch zum Kern umfaßt und relativ zu der im Bereich deren Ausnehmung das Joch und/oder ein Verstellglied, insbesondere in Form eines Verstellrings, mit hoher magnetischer Permeabilität zur Einstellung der magnetisch wirksamen Länge 1 der Ausnehmung der zweiten Hülse bewegbar ist bzw. sind.

Dabei kann vorgesehen sein, daß der Luftspalt in einem Bereich zwischen der ersten Hülse und der zweiten Hülse angeordnet ist.

Ferner kann vorgesehen sein, daß zwischen der ersten Hülse und der zweiten Hülse ein Abstandshalter niedriger magnetischer Permeabilität angeordnet ist.

Bevorzugte Ausführungsformen der Erfindung sind dadurch gekennzeichnet, daß der Kern zumindest eine zweite Ausnehmung an der dem Tauchanker abgewandten Seite und/oder das Verstellglied zumindest eine erste Ausnehmung an der dem Kern zugewandten Seite umfaßt bzw. umfassen, wobei die magnetisch wirksame Länge 1 der Ausnehmung der zweiten Hülse zur gezielten Bündelung der Magnetfeldlinien M durch Relativ-Bewegung zwischen dem Kern und dem Verstellglied, während der der Kern in die erste Ausnehmung in dem Verstellglied und/oder das Verstellglied in die zweite Ausnehmung in dem Kern zumindest teilweise hinein- bzw. aus derselben hinausbewegbar ist, einstellbar ist.

Erfindungsgemäß bevorzugt ist desweiteren, daß der Kern zumindest eine dritte Ausnehmung an seinem dem Tauchanker abgewandten Ende zum Eingriff eines Werkzeuges zur Einstellung seiner Position und/oder das Verstellglied zumindest eine zweite Ausnehmung an der dem Kern abgewandten Seite zum Eingriff eines Werkzeuges zur Einstellung seiner Position aufweist bzw. aufweisen.

Mit der Erfindung wird auch vorgeschlagen, daß die Ummantelung eine Halterung, vorzugsweise hoher magnetischer Permeabilität, für die Spule oder den Magneten und zumindest ein Gleitlager, vorzugsweise hoher magnetischer Permeabilität, umfaßt, wobei vorzugsweise das Gleitlager für den Tauchanker zwischen dem Tauchanker und der ersten Hülse angeordnet ist.

Weiterhin kann vorgesehen sein, daß der Kern und/oder das Verstellglied über ein Gewinde relativ zur zweiten Hülse bewegbar ist bzw. sind.

Ausführungsformen der Erfindung sind gekennzeichnet durch ein erstes Dämpfungsglied in der ersten Ausnehmung des Tauchankers, und/oder ein zweites Dämpfungsglied in der ersten Ausnehmung des Kerns, und/oder ein drittes Dämpfungsglied in der zweiten Ausnehmung des Kerns, und/oder ein viertes Dämpfungsglied in der ersten Ausnehmung des Verstellglieds, wobei vorzugsweise das erste, zweite, dritte und/oder vierte Dämpfungsglied aus einem Elastomer ausgebildet ist bzw. sind.

Schließlich wird erfindungsgemäß vorgeschlagen, daß die Ausnehmung des Tauchankers, die erste und/oder zweite Ausnehmung des Eisenkerns und/oder der Verstellring auf seiner dem Eisenkern zugewandten Seite abgeschrägt ist bzw. sind zur Vergrößerung des Einstellungsbereichs bzw. der Einstellungsbereich.

Der Erfindung liegt somit die überraschende Erkenntnis zugrunde, daß in einem Tauchankersystem der Magnetkreis in zweierlei Hinsicht, entkoppelt voneinander einstellbar ist. Dabei kann erfindungsgemäß sowohl die notwendige Einstellung zur Festlegung eines Einregelpunkts eines elektropneumatischen Druckwandlers im Bereich positiver Steifigkeit als auch die Einstellung zum Herstellen eines quantitativen Zusammenhangs zwischen einem Taktverhältnis und einem Mischdruck durch einen entkoppelten Eingriff in den magnetischen Fluß des Tauchankersystems ermöglicht werden, indem einerseits ein Eisenkern relativ zu einem Tauchanker zur Einstellung eines Luftspaltes dazwischen und andererseits, getrennt hiervon, ein Verstellring relativ zu einer Ringnut in einer Hülse zur Einstellung einer magnetisch wirksamen Länge der Ringnut, nämlich als magnetische Impedanz, bewegt wird.

Weitere Merkmale und Vorteile der Erfindung ergeben sich aus der nachfolgenden Beschreibung, in der zwei Ausführungsbeispiele der Erfindung anhand von schematischen Zeichnungen im Einzelnen erläutert ist. Dabei zeigt:
- Figur 1: eine Schnittansicht durch einen Teil eines elektropneumatischen Druckwandlers mit einem ersten erfindungsgemäßen Tauchankersystem;
- Figur 2: eine Vergrößerung des Ausschnitts A von Figur 1; und
- Figur 3: eine Schnittansicht durch einen Teil eines elektropneumatischen Druckwandlers mit einem zweiten erfindungsgemäßen Tauchankersystems.

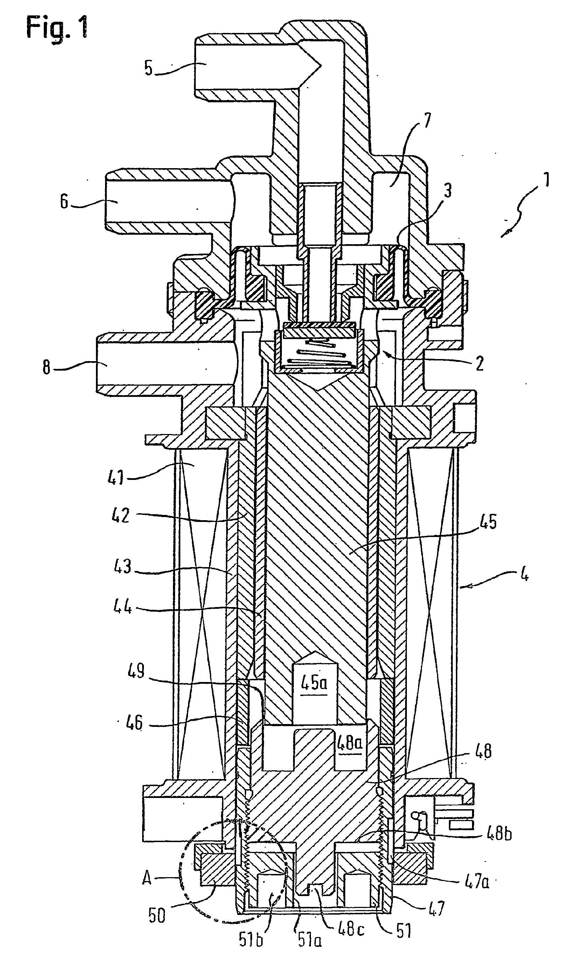

Wie Figur 1 zu entnehmen ist, umfaßt ein elektropneumatischer Druckwandler 1, der beispielsweise für eine pneumatische Steuerung in einem Kraftfahrzeug eingesetzt werden kann, eine Ventileinheit 2, die von einer Membran 3 und einem erfindungsgemäßen Tauchankersystem 4 betätigt wird. Über einen ersten Anschluß 5 zugeführte Luft mit niedrigem Druck läßt sich so mit über einen zweiten Anschluß 8 zugeführter Atmosphärenluft in einer Ventilkammer 7 unter Steuerung der entsprechenden Anschlüsse 5, 8 mischen, daß der in der Ventilkammer 7 erzeugten Mischdruck über einen dritten Anschluß 6 einem Verbraucher zugeführt werden kann. Dabei kann über den ersten Anschluß 5 der Ansaugdruck einer Brennkraftmaschine eines Kraftfahrzeuges zugeführt werden, und der dritte Anschluß 6 mit einem Abgasrückführventil des Kraftfahrzeuges verbunden sein.

Das erfindungsgemäße Tauchankersystem 4 umfaßt eine Spule 41, die unter Zwischenordnung einer ersten Hülse 42 zwischen einer Halterung 43 für die Spule 41 und einer Gleitlagerbuchse 44 einen Tauchanker 45 umgreift, der längs der Gleitlagerbuchse 44 bewegbar ist. Innerhalb der Halterung 43 sind zusätzlich zur ersten Hülse 42 und Gleitlagerbuchse 44 ein Abstandshalter 46 und eine zweite Hülse 47 angeordnet. Die zweite Hülse 47 umgibt dabei zumindest teilweise einen Eisenkern 48, der über ein Gewinde längs der zweiten Hülse 47 bewegbar ist. Im Bereich des Abstandshalters 46 liegt ein Luftspalt 49 zwischen dem Tauchanker 45 und dem Eisenkern 48 vor. An dem der Ventileinheit 2 abgewandten Ende der Halterung 43 sind ein Joch 50 und ein Verstellring 51 vorgesehen, wobei der Verstellring 51 innerhalb der zweiten Hülse 47 und dem Joch 50, längs der zweiten Hülse 47 über ein Gewinde bewegbar, gelagert ist. Zudem sind die erste Hülse 42, die Halterung 43, die zweite Hülse 47 und das Joch 50 aus einem Material hoher magnetischer Permeabilität gebildet und stellen insbesondere eine Eisenummantelung zur Bündelung von Magnetfeldlinien dar.

Der Tauchanker 45 weist eine erste Ausnehmung 45a auf seiner dem Eisenkern 48 zugewandten Seite auf. Die zweite Hülse 47 weist eine erste Ausnehmung 47a, vorzugsweise in Form einer Ringnut, auf ihrer dem Joch 50 zugewandten Seite auf. Der Eisenkern 48 weist eine erste Ausnehmung 48a auf seiner dem Tauchanker 45 zugewandten Seite und eine zweite sowie dritte Ausnehmung auf der dem Tauchanker 45 abgewandten Seite auf. Der Verstellring 51 weist eine erste Ausnehmung 51 a auf der dem Eisenkern 48 zugewandten Seite und eine zweite Ausnehmung 51b auf der dem Eisenkern 48 abgewandten Seite auf.

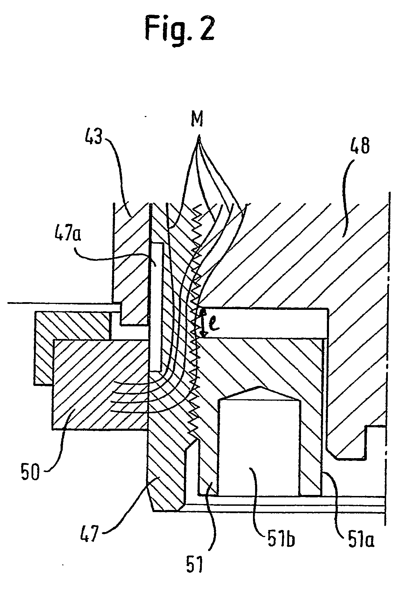

Das soeben im Aufbau beschriebene erfindungsgemäße Tauchankersystem 4 ist wie folgt einstellbar:
i) Der Luftspalt 49 im Magnetkreis des Tauchankersystems 4 ist verldeinerbar, indem der Eisenkern 48 in einer ersten Drehrichtung über ein nicht dargestelltes Werkzeug, das in die dritte Ausnehmung 48c eingreift, gedreht und dabei auf den Tauchanker 45 zu bewegt wird. Dabei wird der Eisenkern 48 in die erste Ausnehmung 45a des Tauchankers 45 und der Tauchanker 45 in die erste Ausnehmung 48a des Eisenkerns 48 teilweise eingetaucht. Eine Drehung des Eisenkerns 48 in die der ersten Drehrichtung entgegengesetzten zweiten Drehrichtung sorgt in analoger Weise für eine Vergrößerung des ersten Luftspalts 49. Über die Größe des Luftspalts 49 kann ein Einregelpunkt nahe dem Wendepunkt der Kraft-Weg-Kennlinie des Tauchankersystems 4 mit positiver Steifigkeit eingestellt werden.
ii) Ein gewünschter quantitativer Zusammenhang zwischen einem Taktverhältnis und einem Mischdruck ist zudem über den Verstellring 51 einstellbar, indem ein nicht gezeigtes Werkzeug in seine zweite Ausnehmung 51b eingeführt wird, um den Verstellring 51 weiter in den Eisenkern 48 hinein oder heraus zu drehen. Dabei wird die Größe der Überlappung der Ausnehmung 47a in der zweiten Hülse 47 von dem Verstellring 51 eingestellt, was eine Führung der Magnetfeldlinien M und somit Einstellung der magnetischen Durchflutung des erfindungsgemäßen Tauchankersystems 4, wie in der Vergrößerung des Ausschnitts A von Figur 1 in Figur 2 dargestellt, eingestellt. Mit anderen Worten wird die magnetisch wirksame Länge 1 der Ausnehmung 47a in der zweiten Hülse 47, also der magnetischen Impedanz, zur Einstellung der magnetischen Durchflutung des Tauchankersystems 4 ermöglicht.

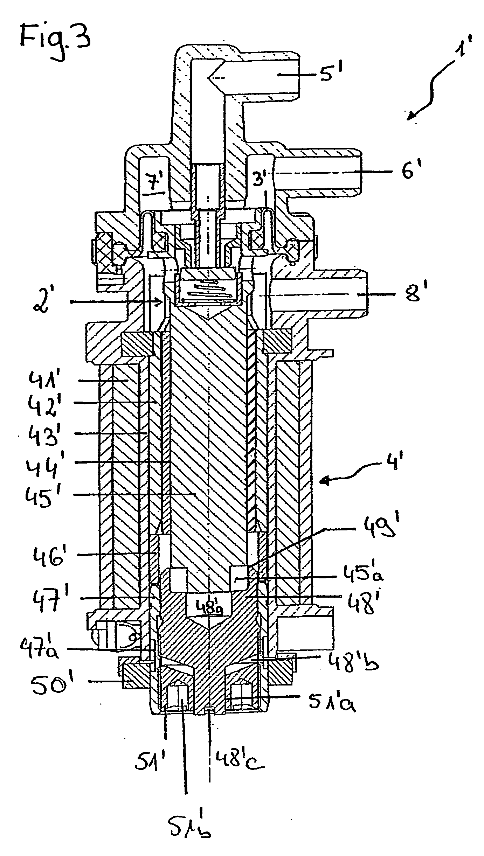

In Figur 3 ist eine zweite Ausführungsform eines erfindungsgemäßen Tauchankersystems 4' für einen elektropneumatischen Druckwandler 1' dargestellt. Die Bauteile, die denjenigen der ersten Ausführungsform entsprechen, weisen die gleichen Bezugszeichen auf, jedoch mit einem Apostroph versehen.

Wie bereits im Zusammenhang mit Figur 1 beschrieben, umfasst der elektropneumatische Druckwandler 1' eine Ventileinheit 2', eine Membran 3', drei Anschlüsse 5', 6' und 8' sowie eine Ventilkammer 7'. Das hier interessierende Tauchankersystem 4' umfaßt wiederum eine von einer Halterung 43' gehaltene Spule 41', die Ihrerseits um eine Eisenummantelung herum angeordnet ist, die zusätzlich zur Halterung 43' eine erste Hülse 42', eine zweite Hülse 47' und ein Joch 50' umfaßt. Die erste Hülse 42' ist unter Zwischenschaltung einer Gleitlagerbuchse 44' zumindest um einen Teil eines Tauchankers 45' herum angeordnet. Zwischen der ersten Hülse 42' und der zweiten Hülse 47' ist ein Abstandshalter 46' aus einem Material mit niedriger magnetischer Permeabilität angeordnet. Die zweite Hülse 47' umgreift einen Eisenkern 48' sowie einen Verstellring 51', zumindest bereichsweise.

Der Tauchanker 45', der Eisenkern 48' sowie der Verstellring 51' der Figur 3 unterscheiden sich insofern von dem Tauchanker 45, dem Eisenkern 48 und dem Verstellring 51 der Figuren 1 und 2, als daß die jeweiligen Ausnehmungen 45'a, 48'a und 48'b bzw. 45a, 48a und 48b unterschiedlich ausgeführt sind. Jedoch ist noch stets ein Eintauchen des Tauchankers 45' in den Eisenkern 48' möglich. Es hat sich allerdings als besonders vorteilhaft herausgestellt, die zweite Ausnehmung 48'b des Eisenkerns 48' und auch die dem Eisenkern 48' zugewandte Seite des Verstellrings 51' abzuschrägen, was zu einer Vergrößerung des Einstellbereichs für die magnetisch wirksame Länge der Aussparung 47'a der zweiten Hülse 47' führt.

Die Funktionsweise des Tauchankersystems 4' entspricht der des Tauchankersystems 4 mit einer entkoppelten Einstellbarkeit, nämliche einer Grobjustage über die Einstellung des Luftspaltes 49' und einer Feinjustage über die Einstellung der magnetisch wirksamen Länge der Ausnehmung 47'a der zweiten Hülse 47' als magnetische Impedanz.

Somit ermöglicht das erfindungsgemäße Tauchankersystem erstmals zwei voneinander entkoppelte Einstellungen bei einfachem Aufbau und leichter Bedienbarkeit zur präzisen Abstimmung des Magnetkreises im Tauchankersystems eines geregelten elektropneumatischen Druckwandlers.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1, 1': Elektropneumatischer Druckwandler
- 2, 2': Ventileinheit
- 3, 3': Membran
- 4, 4': Tauchankersystem
- 5, 5': Anschluß
- 6, 6': Anschluß
- 7, 7': Ventilkammer
- 8, 8': Anschluß
- 41, 41': Spule
- 42, 42': Hülse
- 43, 43': Halterung
- 44, 44': Gleitlagerbuchse
- 45, 45': Tauchanker
- 45a, 45'a: Ausnehmung
- 46, 46': Abstandshalter
- 47, 47': Hülse
- 47a, 47'a: Ausnehmung
- 48, 48': Eisenkern
- 48a, 48'a: Ausnehmung
- 48b, 48'b: Ausnehmung
- 48c, 48'c: Ausnehmung
- 49, 49': Luftspalt
- 50, 50': Joch
- 51, 51': Verstellring
- 51a, 51'a: Ausnehmung
- 51b, 51'b: Ausnehmung

- A: Ausschnitt
- M: Magnetfeldlinie
- l: magnetisch wirksame Länge der Ringnut

## Patentansprüche

1. Tauchankersystem (4, 4') für einen elektropneumatischen Druckwandler (1, 1'), umfassend, zumindest teilweise in einer Magnetfeldlinien M bündelnden Ummantelung (42, 42', 43, 43', 44, 44', 47, 47', 50, 50'), insbesondere in Form einer Eisenummantelung, einen Tauchanker (45, 45') und einen Kern (48, 48'), insbesondere in Form eines Eisen- oder Magnetkerns,
wobei der Tauchanker (45, 45') zumindest eine Ausnehmung (45a, 45'a) auf der dem Kern (48, 48') zugewandten Seite und/oder der Kern (48, 48') zumindest eine erste Ausnehmung (48a, 48'a) auf der dem Tauchanker (45, 45') zugewandten Seite aufweist, und ein Luftspalt (49, 49') zwischen dem Tauchanker (45,45') und dem Kern (48, 48') bereitgestellt ist, wobei der Luftspalt (49, 49') durch Relativ-Bewegung zwischen dem Tauchanker (45, 45') und dem Kern (48, 48'), während der der Tauchanker (45, 45') in die erste Ausnehmung (48a, 48'a) in dem Kern (48, 48') und/oder der Kern (48, 48') in die Ausnehmung (45a, 45'a) in dem Tauchanker (45, 45') zumindest teilweise hinein- bzw. aus derselben hinausbewegbar ist, einstellbar ist, und
die Ummantelung (42,42', 43, 43', 44, 44', 47, 47', 50, 50') zumindest eine erste Hülse (42, 42') und ein Joch (50, 50'), jeweils mit hoher magnetischer Permeabilität, umfaßt, wobei die erste Hülse (42, 42') zwischen dem Tauchanker (45, 45') und zumindest einer Spule (41, 41') und/oder zumindest einem Magneten angeordnet ist, und der Luftspalt (49, 49') in einem Bereich zwischen der ersten Hülse (42, 42') und dem Joch (50, 50') angeordnet ist,
**dadurch gekennzeichnet, daß**
die Ummantelung (42, 42', 43, 43', 44, 44', 47, 47', 50, 50') eine zweite Hülse (47, 47') mit hoher magnetischer Permeabilität zwischen der ersten Hülse (42, 42') und dem Joch (50, 50') umfaßt, die zumindest eine Ausnehmung (47a, 47'a), insbesondere in Form einer Ringnut, auf ihrer dem Kern (48, 48') abgewandten Seite zur Bündelung von Magnetfeldlinien M vom Joch (50, 50') zum Kern (48, 48') umfaßt und relativ zu der im Bereich deren Ausnehmung (47a, 47'a) das Joch und/oder ein Verstellglied (51, 51'), insbesondere in Form eines Verstellrings, mit hoher magnetischer Permeabilität zur Einstellung der magnetisch wirksamen Länge l der Ausnehmung (47a, 47'a) der zweiten Hülse (47, 47') bewegbar ist bzw. sind.

2. Tauchankersystem nach Anspruch 1, **dadurch gekennzeichnet, daß**
der Luftspalt (49, 49') in einem Bereich zwischen der ersten Hülse (42, 42') und der zweiten Hülse (47, 47') angeordnet ist.

3. Tauchankersystem nach Anspruch 1 oder 2, **dadurch gekennzeichnet, daß**
zwischen der ersten Hülse (42, 42') und der zweiten Hülse (47, 47') ein Abstandshalter (46, 46') niedriger magnetischer Permeabilität angeordnet ist.

4. Tauchankersystem nach einem der vorangehenden Ansprüche, **dadurch gekennzeichnet, daß**
der Kern (48, 48') zumindest eine zweite Ausnehmung (48b, 48'b) an der dem Tauchanker (45, 45') abgewandten Seite und/oder das Verstellglied (51, 51') zumindest eine erste Ausnehmung (51a, 51'a) an der dem Kern (48, 48') zugewandten Seite umfaßt bzw. umfassen,
wobei die magnetisch wirksame Länge l der Ausnehmung (47a, 47'a) der zweiten Hülse (47, 47') zur gezielten Bündelung der Magnetfeldlinien M durch Relativ-Bewegung zwischen dem Kern (48, 48') und dem Verstellglied (51, 51'), während der der Kern (48, 48') in die erste Ausnehmung (51a, 51'a) in dem Verstellglied (51, 51') und/oder das Verstellglied (51, 51') in die zweite Ausnehmung (48b, 48'b) in dem Kern (48, 48') zumindest teilweise hinein- bzw. aus derselben hinausbewegbar ist, einstellbar ist.

5. Tauchankersystem nach einem der vorangehenden Ansprüche, **dadurch gekennzeichnet, daß**
der Kern (48, 48') zumindest eine dritte Ausnehmung (48c, 48'c) an seinem dem Tauchanker (45, 45') abgewandten Ende zum Eingriff eines Werkzeuges zur Einstellung seiner Position und/oder
das Verstellglied (51, 51') zumindest eine zweite Ausnehmung (51b, 51'b) an der dem Kern (48, 48') abgewandten Seite zum Eingriff eines Werkzeuges zur Einstellung seiner Position aufweist bzw. aufweisen.

6. Tauchankersystem nach einem der vorangehenden Ansprüche, **dadurch gekennzeichnet, daß**
die Ummantelung (42, 42', 43, 43', 44, 44', 47, 47', 50, 50') eine Halterung (43, 43'), vorzugsweise hoher magnetischer Permeabilität, für die Spule (41, 41') oder den Magneten und zumindest ein Gleitlager (44, 44'), vorzugsweise hoher magnetischer Permeabilität, umfaßt,
wobei vorzugsweise das Gleitlager (44, 44') für den Tauchanker (45, 45') zwischen dem Tauchanker (45, 45') und der ersten Hülse (42, 42') angeordnet ist.

7. Tauchankersystem nach einem der vorangehenden Ansprüche, **dadurch gekennzeichnet, daß**
der Kern (48, 48') und/oder das Verstellglied (51, 51') über ein Gewinde relativ zur zweiten Hülse (47, 47') bewegbar ist bzw. sind.

8. Tauchankersystem nach einem der vorangehenden Ansprüche, **gekennzeichnet durch** ein erstes Dämpfungsglied in der ersten Ausnehmung des Tauchankers, und/oder ein zweites Dämpfungsglied in der ersten Ausnehmung des Kerns, und/oder ein drittes Dämpfungsglied in der zweiten Ausnehmung des Kerns, und/oder ein viertes Dämpfungsglied in der ersten Ausnehmung des Verstellglieds,
wobei vorzugsweise das erste, zweite, dritte und/oder vierte Dämpfungsglied aus einem Elastomer ausgebildet ist bzw. sind.

9. Tauchankersystem nach einem der vorangehenden Ansprüche, **dadurch gekennzeichnet, daß**
die Ausnehmung des Tauchankers, die erste und/oder zweite Ausnehmung (48'b) des Eisenkerns (48') und/oder der Verstellring (51') auf seiner dem Eisenkern (48') zugewandten Seite abgeschrägt ist bzw. sind zur Vergrößerung des Einstellungsbereichs bzw. der Einstellungsbereich.

## Claims

1. A solenoid plunger system (4, 4') for an electropneumatic pressure transducer (1, 1'), comprising at least partly a solenoid plunger (45, 45') and a core (48, 48'), particularly in the form of an iron or magnetic core, in a casing (42, 42', 43, 43', 44, 44', 47, 47', 50, 50') which focuses magnetic field lines M,
wherein the solenoid plunger (45, 45) includes at least one recess (45a, 45'a) on a side facing toward the core (48, 48') and/or the core (48, 48') includes at least a first recess (48a, 48'a) on a side facing toward the solenoid plunger (45, 45'), and an air gap (49, 49') is provided between the solenoid plunger (45, 4.5') and the core (48, 48'), the air gap (49, 49') being adjustable by relative movement between the solenoid plunger (45, 45') and the core (48, 48'), during which relative movement the solenoid plunger (45, 45') can, at least partly, be moved into or out of the first recess (48a, 48' a) in the core (48, 48') and/or the core (48, 48') can be moved, at least partly, into or out of the first recess (48a, 48'a) in the solenoid plunger (45, 45'); and
the casing (42, 42', 43, 43', 44, 44', 47, 47', 50, 50') includes at least a first shell (42, 42') and a yoke (50, 50'), each of high magnetic permeability, wherein the first shell (42, 42') is arranged between the solenoid plunger (45, 45') and at least one coil (41, 41') and/or at least one magnet, and the air gap (49, 49') is arranged in a region between the first shell (42, 42') and the yoke (50, 50'),
**characterized in that**
the casing (42, 42', 43, 43', 44, 44', 47, 47', 50, 50') includes a second shell (47, 47') of high magnetic permeability between the first shell (42, 42') and the yoke (50, 50'), said second shell (47, 47') comprising at least one recess (47a, 47'a), particularly in the form of an annular groove, on its side facing away from the core (48, 48') for focusing magnetic field lines M from the yoke (50, 50') onto the core (48, 48'), and in the region of the recess of said second shell (47, 47'), the yoke and/or an adjustment member (51, 51'), particularly in the form of an adjustment ring, of high magnetic permeability is/are moveable relative to said second shell (47, 47') for adjusting the magnetically effective length l of the recess (47a, 47'a) of the second shell (47, 47').

2. The solenoid plunger system as set forth in claim 1, **characterized in that**
the air gap (49, 49') is arranged in a region between the first shell (42, 42') and the second shell (47, 47').

3. The solenoid plunger system as set forth in claim 1 or 2, **characterized in that**
a spacer of low magnetic permeability is arranged between the first shell (42, 42') and the second shell (47, 47').

4. The solenoid plunger system as set forth in any of the preceding claims, **characterized in that**
the core (48, 48') comprises at least a second recess (48b, 48'b) on a side facing away from the solenoid plunger (45, 45') and/or the adjustment member (51, 51') comprises at least a first recess (51a, 51'a) on a side facing toward the core (48, 48'),
wherein the magnetically effective length l of the recess (47a, 47'a) of the second shell (47, 47'), for targeted focusing of the magnetic field lines M, is adjustable by relative movement between the core (48, 48') and the adjustment member (51, 51'), during which relative movement the core (48, 48') can, at least partly, be moved into or out of the first recess (48a, 48'a) in the adjustment member, and/or the adjustment member can be moved, at least partly, into or out of the second recess (48b, 48'b) in the core (48, 48').

5. The solenoid plunger system as set forth in any of the preceding claims, **characterized in that**
the core (48, 48') includes at least a third recess (48c, 48'c) at an end facing away from the solenoid plunger (45, 45') for the engagement of a tool for adjusting its position, and/or
the adjustment member (51, 51') includes at least a second recess (51b, 51'b) at an end facing away from the core (48, 48') for the engagement of a tool for adjusting its position

6. The solenoid plunger system as set forth in any of the preceding claims, **characterized in that**
the casing (42, 42', 43, 43', 44, 44', 47, 47', 50, 50') comprises a holding device (43, 43'), prefereably of a high magnetic permeability for the coil (41, 41') or the magnet and at least one plain bearing (44, 44'),prefereably of a high magnetic permeability,
wherein preferably the plain bearing (44, 44') for the solenoid plunger (45, 45') is arranged between the solenoid plunger (45, 45') and the first shell (42, 42').

7. The solenoid plunger system as set forth in any of the preceding claims, **characterized in that** the core (48, 48') and/or the adjustment member (51, 51') is/are moveable relative to the second shell (47, 47') by way of a screw thread.

8. The solenoid plunger system as set forth in any of the preceding claims, **characterized by** a first attenuator in the first recess of the solenoid plunger, and/or a second attenuator in the first recess of the core, and/or a third attenuator in the second recess of the core, and/or a fourth attenuator in the first recess of the adjustment_member,
wherein the first, second, third and/or fourth attenuator is/are preferably made from an elastomer.

9. The solenoid plunger system as set forth in any of the preceding claims, **characterized in that**
the recess of the solenoid plunger, the first and/or second recess (48'b) of the iron core (48') and/or the adjustment ring (51') on the side facing toward the iron core (48') is/are beveled off so as to increase the adjustment range(s).

## Revendications

1. Système à induit plongeur (4, 4') pour un capteur de pression électropneumatique (1, 1'), comprenant, au moins partiellement dans une enveloppe (42, 42', 43, 43', 44, 44', 47, 47', 50, 50') concentrant les lignes de force du champ magnétique M, en particulier sous la forme d'une enveloppe en fer, un induit plongeur (45, 45') et un noyau (48, 48'), en particulier sous la forme d'un noyau de fer ou d'un tore magnétique,
l'induit plongeur (45, 45') comprenant au moins un creux (45a, 45'a) sur le côté orienté vers le noyau (48, 48') et/ou le noyau (48, 48') comprenant au moins un premier creux (48a, 48'a) sur le côté orienté vers l'induit plongeur (45, 45'), et un entrefer (49, 49') étant disposé entre l'induit plongeur (45, 45') et le noyau (48, 48'), l'entrefer (49, 49') étant réglable par l'intermédiaire d'un mouvement relatif entre l'induit plongeur (45, 45') et le noyau (48, 48'), pendant lequel l'induit plongeur (45, 45') peut être déplacé à l'intérieur ou à l'extérieur dans le premier creux (48a, 48'a) à l'intérieur du noyau (48, 48') et/ou le noyau (48, 48') peut être déplacé à l'intérieur ou à l'extérieur dans le creux (45a, 45'a) à l'intérieur de l'induit plongeur (45, 45'), et
l'enveloppe (42, 42', 43, 43', 44, 44', 47, 47', 50, 50') comprenant au moins une première douille (42, 42') et une culasse (50, 50'), dotées respectivement d'une perméabilité élevée, la première douille (42, 42') étant agencée entre l'induit plongeur (45, 45').et au moins une bobine (41, 41') et/ou au moins un aimant, et l'entrefer (49, 49') étant agencé dans une zone située entre la première douille (42, 42') et la culasse (50, 50'), **caractérisé en ce que** l'enveloppe (42, 42', 43, 43', 44, 44', 47, 47', 50, 50') comporte une deuxième douille (47, 47') dotée d'une perméabilité élevée entre la première douille (42, 42') et la culasse (50, 50'), laquelle comprend au moins un creux (47a, 47'a), en particulier sous la forme d'une gorge de retenue, sur son côté éloigné du noyau (48, -48') pour la concentration des lignes de force du champ magnétique M de la culasse (50, 50') vers le noyau (48, 48'), et la culasse et/ou l'élément de réglage (51, 51'), en particulier sous la forme d'un anneau de réglage, doté(e) d'une perméabilité élevée, pouvant être déplacé (e) par rapport à la zone de son creux (47, 47a) en vue du réglage de la longueur à effet magnétique l du creux (47'a, 47'a) de la deuxième douille (47, 47').

2. Système à induit plongeur selon la revendication 1, **caractérisé en ce que** l'entrefer (49, 49') est agencé dans une zone entre la première douille (42, 42') et la deuxième douille (47, 47').

3. Système à induit plongeur selon la revendication 1 ou 2, **caractérisé en ce qu'**une entretoise (46, 46') dotée d'une perméabilité magnétique moindre peut être agencée entre la première douille (42, 42') et la deuxième douille (47, 47').

4. Système à induit plongeur selon l'une quelconque des revendications précédentes, **caractérisé en ce que**
le noyau (48, 48') comprend au moins un deuxième creux (48b, 48'b) sur le côté éloigné de l'induit plongeur (45, 45') et/ou l'élément de réglage (51, 51') comprend au moins un premier creux (51a, 51'a) sur le côté orienté vers le noyau (48, 48'),
la longueur à effet magnétique l du creux (47a, 47'a) de la deuxième douille (47, 47') pouvant être réglée en vue de la concentration des lignes de force du champ magnétique M par l'intermédiaire d'un mouvement relatif entre le noyau (48, 48') et l'élément de réglage (51, 51'), pendant lequel le noyau (48, 48') peut être déplacé au moins partiellement à l'intérieur, respectivement, à l'extérieur dans le premier creux (51a, 51'a) sur l'élément de réglage (51, 51') et/ou l'élément de réglage (51, 51') pouvant être déplacé au moins partiellement à l'intérieur, respectivement, à l'extérieur dans le deuxième creux (48b, 48'b) à l'intérieur du noyau (48, 48').

5. Système à induit plongeur selon l'une quelconque des revendications précédentes, **caractérisé en ce que**
le noyau (48, 48') comprend au moins un troisième creux (48c, 48'c) sur son extrémité éloignée de l'induit plongeur (45, 45') en-vue de la prise d'un outil pour le réglage de sa position, et/ou
**en ce que** l'élément de réglage (51, 51') comprend au moins un deuxième creux (51b, 51'b) sur le côté éloigné du noyau (48, 48') en vue de la prise d'un outil pour réglage de sa position.

6. Système à induit plongeur selon l'une quelconque des revendications précédentes, **caractérisé en ce que** l'enveloppe (42, 42', 43, 43', 44, 44', 47, 47', 50, 50') comprend une fixation (43, 43'), de préférence dotée d'une perméabilité élevée, pour la bobine (41, 41') ou l'aimant, et au moins un palier lisse (44, 44'), de préférence doté d'une perméabilité élevée,
le palier lisse (44, 44') étant de préférence agencé, pour l'induit plongeur (45, 45'), entre l'induit plongeur (45, 45') et la première douille (42, 42').

7. Système à induit plongeur selon l'une quelconque des revendications précédentes, **caractérisé en ce que**
le noyau (48, 48') et/ou l'élément de réglage (51, 51') peut/peuvent être déplacé (s) par rapport à la deuxième douille (47, 47') par l'intermédiaire d'un filetage.

8. Système à induit plongeur selon l'une quelconque des revendications précédentes, **caractérisé par** un premier atténuateur dans le premier creux de l'induit plongeur, et/ou un deuxième atténuateur dans le premier creux du noyau, et/ou un troisième atténuateur dans le deuxième creux du noyau, et/ou un quatrième atténuateur dans le premier creux de l'élément de réglage, les premier, deuxième, troisième et/ou quatrième atténuateurs étant formés de préférence à partir d'un matériau élastomère.

9. Système à induit plongeur selon l'une quelconque des revendications précédentes, **caractérisé en ce que** le creux de l'induit plongeur, le premier et/ou deuxième creux (48'b) de l'entrefer (48') et/ou de l'anneau de réglage (51') est biseauté sur son côté orienté vers l'entrefer (48'), en vue de l'agrandissement de la zone de réglage respectivement des zones de réglage.
